(19) Europäisches Patentamt
European Patent Office
Office européen des brevets

(11) Veröffentlichungsnummer: **0 413 346 B1**

(12) # EUROPÄISCHE PATENTSCHRIFT

(45) Veröffentlichungstag der Patentschrift: **22.02.95**

(51) Int. Cl.[6]: **C08G 77/20**, C08G 77/38

(21) Anmeldenummer: **90115774.3**

(22) Anmeldetag: **17.08.90**

(54) **Verfahren zur Herstellung von Organo(poly)siloxanen mit Si-gebunden konjugierten Dienylgruppen.**

(30) Priorität: **18.08.89 DE 3927359**

(43) Veröffentlichungstag der Anmeldung:
**20.02.91 Patentblatt 91/08**

(45) Bekanntmachung des Hinweises auf die Patenterteilung:
**22.02.95 Patentblatt 95/08**

(84) Benannte Vertragsstaaten:
**BE DE FR GB IT NL**

(56) Entgegenhaltungen:
**GB-A- 1 081 150**
**US-A- 2 823 218**
**US-A- 3 933 880**

**CHEMICAL ABSTRACTS, Band 51, Nr. 13, 10. Juli 1957, Spalten 9474,9475, Zusammenfassung Nr. 9474f, Columbus, Ohio, US; L.L. SHCHUKOVSKAYA et al.:"Addition of polyhalosilanes and alkylhydrosilanes to compounds which contain a triple bond", & ZHUR.OBSHCHEI KHIM.**

(73) Patentinhaber: **WACKER-CHEMIE GMBH**
**Hanns-Seidel-Platz 4**
**D-81737 München (DE)**

(72) Erfinder: **Herzig, Christian, Dr. Dipl.-Chem.**
**Schröckenbauer 1**
**D-8221 Taching (DE)**

**EP 0 413 346 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Lineare und cyclische Organo(poly)siloxane, die Si-gebundene Butadienyl- und 3-Methylbutadienylgruppen enthalten, sind in DE-AS 1 210 846 und GB-A 1 081 150 beschrieben. Sie werden durch Anlagerung von Vinylacetylen bzw. Isopropenylacetylen an Organo(poly)siloxan mit mindestens einem Si-gebundenem Wasserstoffatom in Gegenwart von die Anlagerung von Si-gebundenem Wasserstoff an aliphatische Mehrfachbindung förderndem Katalysator hergestellt. Vinylacetylen ist gasförmig, so daß unter Druck gearbeitet werden muß, und neigt zur Explosion. Die Ausbeuten bei dem Verfahren sind nur mäßig.

Die Addition von 3-Methyl-1-butin-3-ol an Si-gebundenen Wasserstoff aufweisenden Organosiliciumverbindungen in Gegenwart von Hexachloroplatinsäure ist in US-A 2 823 218 (ausgegeben 11. Februar 1958, J. L. Speier et al., Dow Corning Corporation) beschrieben. Weiterhin ist aus Chemical Abstracts 51, 9474f, 1957 bekannt, daß 2-Triethylsilyl-3-methyl-1,3-butadien mittels Wasserabspaltung durch Erhitzen von 2-Triethylsilyl-3-methyl-1-buten-3-ol in Gegenwart von $KHSO_4$ erhältlich ist.

Es bestand die Aufgabe, Organo(poly)siloxane mit Si-gebundenen konjugierten Dienylgruppen in einem einfachen Verfahren, aus leicht zugänglichen Stoffen und in guten Ausbeuten herzustellen.

Gegenstand der Erfindung ist ein Verfahren zur Herstellung von Organo(poly)siloxanen mit Si-gebundenen konjugierten Dienylgruppen der allgemeinen Formel

$$Q_aR_bSiO_{\frac{4-(a+b)}{2}} \quad (I) \quad ,$$

wobei R gleich oder verschieden ist, einen einwertigen gegebenenfalls halogenierten Kohlenwasserstoffrest mit 1 bis 18 Kohlenstoffatom(en) je Rest bedeutet,
Q einen Rest der Formel

$-CH=CH-CR^1=CR^2R^3$

und/oder

$$H_2C=\underset{|}{C}-CR^1=CR^2R^3$$

bedeutet, wobei $R^1$ ein Wasserstoffatom oder einen einwertigen, gegebenenfalls halogenierten Kohlenwasserstoffrest mit 1 bis 12 Kohlenstoffatom(en) je Rest und $R^2$ ein Wasserstoffatom oder einen einwertigen Kohlenwasserstoffrest mit 1 bis 12 Kohlenstoffatom(en) je Rest bedeutet oder die beiden Reste $R^1$ und $R^2$ zusammen einen zweiwertigen Kohlenwasserstoffrest mit 3 bis 5 Kohlenstoffatomen je Rest darstellen, $R^3$ ein Wasserstoffatom oder einen einwertigen Kohlenwasserstoffrest mit 1 bis 4 Kohlenstoffatom(en) je Rest bedeutet, mit der Maßgabe, daß $R^3$ ein Wasserstoffatom ist, wenn die beiden Reste $R^1$ und $R^2$ zusammen einen zweiwertigen Kohlenwasserstoffrest mit 3 bis 5 Kohlenstoffatomen je Rest darstellen,
a 0 oder 1, durchschnittlich 0,003 bis 1,0,
b 0, 1, 2 oder 3 , durchschnittlich 0,05 bis 2,5, und die Summe $a+b$ durchschnittlich nicht größer als 3 ist,
mit der Maßgabe, daß mindestens ein Rest Q je Molekül enthalten ist, dadurch gekennzeichnet, daß sekundärer oder tertiärer acetylenischer Alkohol (1) der allgemeinen Formel

$HC \equiv C-C(OH)R^1-CHR^2R^3$ ,

wobei $R^1$, $R^2$ und $R^3$ die oben dafür angegebene Bedeutung haben, an ein Organo(poly)siloxan (2) mit mindestens einem Si-gebundenen Wasserstoffatom der allgemeinen Formel

$$H_eR_fSiO_{\frac{4-(e+f)}{2}} \quad (III) \quad ,$$

wobei R die oben dafür angegebene Bedeutung hat,
e 0 oder 1, durchschnittlich 0,003 bis 1,0,
f 0, 1, 2 oder 3, durchschnittlich 0,05 bis 2,5 und
die Summe von e + f nicht größer als 3 ist,
in Gegenwart von die Anlagerung von Si-gebundenen Wasserstoff an aliphatische Mehrfachbindung förderndem Katalysator (3) angelagert wird, und dann von den Alkenolgruppen des so erhaltenen Organo(poly)siloxans in Gegenwart von saurem Katalysator (4) Wasser intramolekular abgespalten wird.

Aus Chemical Abstracts 51, 9474f, 1957 war nicht zu erwarten, daß sich butadienylfunktionelle Organo(poly)siloxane herstellen lassen, ohne daß es zu einer Vernetzung über die Butadienylgruppen, ausgelöst durch die Anwesenheit von Säuren, die die kationische Polymerisation der Butadienylgruppen fördern, kommt.

Beispiele für Reste R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, Octadecylreste, wie der n-Octadecylrest; Alkenylreste, wie der Vinyl- und der Allylrest; Cycloalkylreste, wie Cyclopentyl-, Cyclohexyl-, Cycloheptylreste und Methylcyclohexylreste; Arylreste, wie der Phenyl-, Naphthyl- und Anthryl- und Phenanthrylrest; Alkarylreste, wie o-, m-, p-Tolylreste, Xylylreste und Ethylphenylreste; und Aralkylreste, wie der Benzylrest, der $\alpha$- und der $\beta$-Phenylethylrest. Bevorzugte Beispiele für Reste R sind der Methyl- und Phenylrest.

Beispiele für halogenierte Reste R sind Halogenalkylreste, wie der 3,3,3-Trifluor-n-propylrest, der 2,2,2,2′,2′,2′-Hexafluorisopropylrest, der Heptafluorisopropylrest, und Halogenarylreste, wie der o-, m-, und p-Chlorphenylrest.

Beispiele für Kohlenwasserstoffreste $R^1$ sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest; Arylreste, wie der Phenylrest; Alkarylreste, wie o-, m- und p-Tolylreste, Xylylreste und Ethylphenylreste; und Aralkylreste wie der Benzylrest.

Beispiele für halogenierte Kohlenwasserstoffreste $R^1$ sind Halogenalkylreste, wie der 1,1,1-Trichlormethylrest, der 3,3,3-Trifluor-n-propylrest, der 2,2,2,2′,2′,2′-Hexafluorisopropylrest und der Heptafluorisopropylrest und Halogenarylreste, wie der o-, m-, und p-Chlorphenylrest.

Vorzugsweise ist der Rest $R^1$ ein Methyl- oder Phenylrest, bevorzugt ein Methylrest.

Beispiele für Kohlenwasserstoffreste $R^2$ sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, und Dodecylreste, wie der n-Dodecylrest.

Beispiele für Kohlenwasserstoffreste $R^3$ sind Alkylreste, wie der Methyl-, Ethyl-, n-Propyl-, iso-Propyl-, 1-n-Butyl-, 2-n-Butyl-, iso-Butyl- und tert.-Butylrest.

Beispiele für Reste, bei denen die Reste $R^1$ und $R^2$ zusammen einen zweiwertigen Kohlenwasserstoffrest mit 3 bis 5 Kohlenstoffatomen darstellen, sind solche der Formel $-(CH_2)_3-$, $-(CH_2)_4-$, $-CH(CH_3)-(CH_2)_3-$, $-CH_2-CH(CH_3)-(CH_2)_2-$ und $-(CH_2)_5-$, wobei $-(CH_2)_4-$ bevorzugt ist.

Vorzugsweise ist der Rest $R^2$ ein Wasserstoffatom oder ein Methylrest, bevorzugt ein Wasserstoffatom.

Vorzugsweise ist der Rest $R^3$ ein Wasserstoffatom.

Bevorzugt ist in der Formel (I) a durchschnittlich 0,03 bis 1,0 und b durchschnittlich 0,5 bis 2,0.

Die Formel (I) für die erfindungsgemäßen Organo(poly)siloxane mit Si-gebundenen konjugierten Dienylgruppen beinhaltet lineare, verzweigte und auch cyclische Organo(poly)siloxane. Das durchschnittliche Molekulargewicht der erfindungsgemäßen Organo(poly)siloxane beträgt vorzugsweise 200 bis 1 000 000 g/Mol, bevorzugt 300 bis 50 000 g/Mol. Die durchschnittliche Viskosität der erfindungsgemäßen Organo(poly)siloxane beträgt vorzugsweise mindestens 3 $mm^2 \cdot s^{-1}$ bei 25 °C, bevorzugt 3 bis 1 000 000 $mm^2 \cdot s^{-1}$ bei 25 °C. Die erfindungsgemäßen Organo(poly)siloxane können aber auch Feststoffe sein.

Beispiele für die erfindungsgemäß hergestellten Organo(poly)siloxane mit Si-gebundenen konjugierten Dienylgruppen sind solche der Formel

$ZMe_2SiOSiMe_2Z$

$ZMe_2SiO(SiMe_2O)_{11}SiMe_2Z$

$ZMe_2SiO(SiMe_2O)_{64}SiMe_2Z$

$Me_3SiOSiZMeOSiMe_3$

$Me_3SiO(SiZMeO)_7(SiMe_2O)_{15}SiMe_3$

$Me_3SiO(SiZMeO)_5(SiMe_2O)_{200}SiMe_3$
$ZMe_2SiO(SiZMeO)_3(SiMe_2O)_{95}SiMe_2Z$
$(SiZMeO)_4$

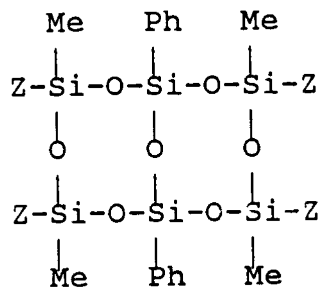

$YMe_2SiOSiMe_2Y$
$YMe_2SiO(SiMe_2O)_6SiMe_2Y$
$Me_3SiO(SiYMeO)_7(SiMe_2O)_{15}SiMe_3$
$XMe_2SiO(SiMe_2O)_{11}SiMe_2X$
$(SiVMeO)_4$
wobei Me ein Methylrest, Ph ein Phenylrest Z ein Rest der Formel

$-CH=CH-C(CH_3)=CH_2$

und/oder

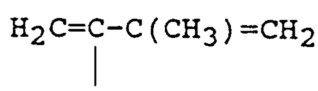

Y ein Rest der Formel

$-CH=CH-CH=CH_2$

und/oder

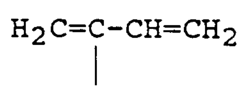

X ein Rest der Formel

$-CH=CH-C(CH_3)=CH-CH_3$

und/oder

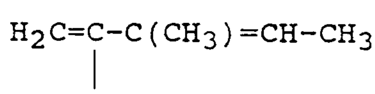

und V ein Rest der Formel

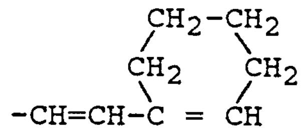

und/oder

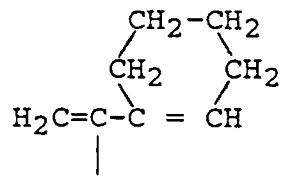

bedeutet.

Bevorzugt als Organo(poly)siloxane mit Si-gebundenen konjugierten Dienylgruppen sind solche der allgemeinen Formel

$Q_dR_{3-d}SiO(SiR_2O)_n(SiRQO)_mSiR_{3-d}Q_d$ (II),

wobei R und Q die oben dafür angegebene Bedeutung haben,
d 0 oder 1,
n 0 oder eine ganze Zahl von 1 bis 1500 und
m 0 oder eine ganze Zahl von 1 bis 200 bedeutet,
mit der Maßgabe, daß mindestens ein Rest Q je Molekül enthalten ist, und das Verhältnis n:m nicht größer als 200 ist.

Beispiele für sekundäre und tertiäre acetylenische Alkohole (1), die bei dem erfindungsgemäßen Verfahren eingesetzt werden, sind 2-Methyl-3-butin-2-ol, 3-Butin-2-ol, 3-Methyl-4-pentin-3-ol, 4-Pentin-3-ol, 1-Ethinylcyclohexan-1-ol, 3-Ethyl-4-pentin-3-ol,2-Phenyl-3-butin-2-ol, 1-Ethinylcyclopentan-1-ol, und 3-Phenyl-4-pentin-3-ol. Bevorzugt ist 2-Methyl-3-butin-2-ol, 3-Methyl-4-pentin-3-ol und 1-Ethinylcyclohexan-1-ol, wobei 2-Methyl-3-butin-2-ol besonders bevorzugt ist.

Verfahren zum Herstellen von acetylenischen Alkoholen (1) sind dem Fachmann bekannt. Acetylenische Alkohole (1) werden beispielsweise nach dem Reppe-Verfahren aus Acetylen und Carbonylverbindungen nach folgendem Reaktionsschema erhalten:

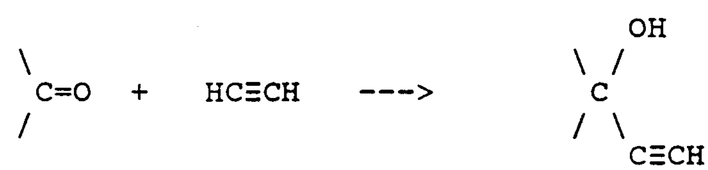

Als Organo(poly)siloxane (2) mit mindestens einem Si-gebundenen Wasserstoffatom können auch bei dem erfindungsgemäßen Verfahren die gleichen linearen, verzweigten oder cyclischen Organo(poly)siloxane mit mindestens einem Si-gebundenen Wasserstoffatom verwendet werden, die bisher bei der Anlagerung von aliphatische Mehrfachbindung aufweisende Verbindungen an Si-gebundenen Wasserstoff aufweisende Organo(poly)siloxanen in Gegenwart von die Anlagerung von Si-gebundenen Wasserstoff an aliphatische Mehrfachbindung fördernde Katalysatoren eingesetzt werden konnten.

In der Formel (III) für Organo(poly)siloxane (2) sind neben linearen und verzweigten Organopolysiloxanen auch cyclische Organo(poly)siloxane enthalten. Die Organo(poly)siloxane (2) enthalten vorzugsweise 0,04 bis 1,6 Gew.-%, bevorzugt 0,1 bis 1,0 Gew.-%, Si-gebundenen Wasserstoff. Die durchschnittliche

Viskosität der Organo(poly)siloxane (2) beträgt vorzugsweise 0,5 bis 500 000 mPa•s, bevorzugt 1,0 bis 10 000 mPa•s.

Als Organo(poly)siloxane (2) mit mindestens einem Si-gebundenen Wasserstoff werden bevorzugt solche der allgemeinen Formel

$$H_dR_{3-d}SiO(SiR_2O)_o(SiRHO)_pSiR_{3-d}H_d \qquad (IV),$$

wobei R und d die oben dafür angegebene Bedutung haben,
o 0 oder eine ganze Zahl von 1 bis 1500 und
p 0 oder eine ganze Zahl von 1 bis 200 bedeutet,
mit der Maßgabe, daß das Verhältnis o:p nicht größer als 200
ist, eingesetzt. Besonders bevorzugt sind in der obigen Formel die Reste R Methyl- oder Phenylreste.

Beispiele für Organo(poly)siloxane (2) sind Mischpolymerisate aus Dimethylhydrogensiloxan- und Dimethylsiloxaneinheiten, Mischpolymerisate aus Dimethylhydrogensiloxan-, Dimethylsiloxan- und Methylhydrogensiloxaneinheiten, Mischpolymerisate aus Trimethylsiloxan- und Methylhydrogensiloxaneinheiten, Mischpolymerisate aus Trimethylsiloxan-, Dimethylsiloxan- und Methylhydrogensiloxaneinheiten, Mischpolymerisate aus Dimethylhydrogensiloxan-, Dimethylsiloxan- und Phenylmethylsiloxaneinheiten, cyclische Methylhydrogenpolysiloxane, Mischpolymerisate aus Dimethylhydrogensiloxan- und Methylsiloxaneinheiten und Mischpolymerisate aus Dimethylhydrogensiloxan- und Phenylsiloxaneinheiten.

Verfahren zum Herstellen von Organo(poly)siloxanen (2), auch von solchen der bevorzugten Art, sind allgemein bekannt.

Acetylenischer Alkohol (1) wird bei dem erfindungsgemäßen Verfahren vorzugsweise in solchen Mengen eingesetzt, daß 0,9 bis 3,0 Mol, bevorzugt 1,05 bis 1,10 Mol, acetylenischer Alkohol (1) je Grammatom Si-gebundener Wasserstoff in dem Organo(poly)siloxan (2) vorliegt.

Als die Anlagerung von Si-gebundenem Wasserstoff an aliphatische Mehrfachbindung fördernde Katalysatoren (3) können auch bei dem erfindungsgemäßen Verfahren die gleichen Katalysatoren eingesetzt werden, die auch bisher zur Förderung der Anlagerung von Si-gebundenen Wasserstoff an aliphatische Mehrfachbindung eingesetzt werden konnten. Bei den Katalysatoren (3) handelt es sich vorzugsweise um ein Metall aus der Gruppe der Platinmetalle oder um eine Verbindung oder einen Komplex aus der Gruppe der Platinmetalle. Beispiele für solche Katalysatoren sind metallisches und feinverteiltes Platin, das sich auf Trägern, wie Siliciumdioxyd, Aluminiumoxyd oder Aktivkohle befinden kann, Verbindungen oder Komplexe von Platin, wie Platinhalogenide, z.B. $PtCl_4$, $H_2PtCl_6{*}6H_2O$, $Na_2PtCl_4{*}4H_2O$, Platin-Olefin-Komplexe, Platin-Alkohol-Komplexe, Platin-Alkoholat-Komplexe, Platin-Ether-Komplexe, Platin-Aldehyd-Komplexe, Platin-Keton-Komplexe, einschließlich Umsetzungsprodukten aus $H_2PtCl_6{*}6H_2O$ und Cyclohexanon, Platin-Vinylsiloxankomplexe, wie Platin-1,3-Divinyl-1,1,3,3-tetramethyldisiloxankomplexe mit oder ohne Gehalt an nachweisbarem anorganisch gebundenem Halogen, Bis-(gammapicolin)-platindichlorid, Trimethylendipyridinplatindichlorid, Dicyclopentadienplatindichlorid, Dimethylsulfoxydethylenplatin-(II)-dichlorid sowie Umsetzungsprodukte von Platintetrachlorid mit Olefin und primärem Amin oder sekundärem Amin oder primärem und sekundärem Amin gemäß US-A 4 292 434, wie das Umsetzungsprodukt aus in 1-Octen gelöstem Platintetrachlorid mit sec.-Butylamin, oder Ammonium-Platinkomplexe gemäß EP-B 110 370.

Der Katalysator (3) wird vorzugsweise in Mengen von 0,5 bis 100 Gew.-ppm (Gewichtsteilen je Million Gewichtsteilen), bevorzugt in Mengen von 1 bis 20 Gew.-ppm eingesetzt, jeweils berechnet als elementares Platin und bezogen auf das Gesamtgewicht von acetylenischem Alkohol (1) und Organo(poly)siloxan (2) mit mindestens einem Si-gebundenem Wasserstoffatom.

Die Additionsreaktion (oder Hydrosilylierungsreaktion) wird vorzugsweise beim Druck der umgebenden Atmosphäre, also etwa bei 1020 hpa (abs.), durchgeführt, sie kann aber auch bei höheren oder niedrigeren Drücken durchgeführt werden. Ferner wird die Additionsreaktion vorzugsweise bei einer Temperatur von 70°C bis 150°C, bevorzugt 100°C bis 120°C, durchgeführt.

Bei der Hydrosilylierungsreaktion entsteht ein Isomerengemisch, wie folgt schematisch dargestellt:

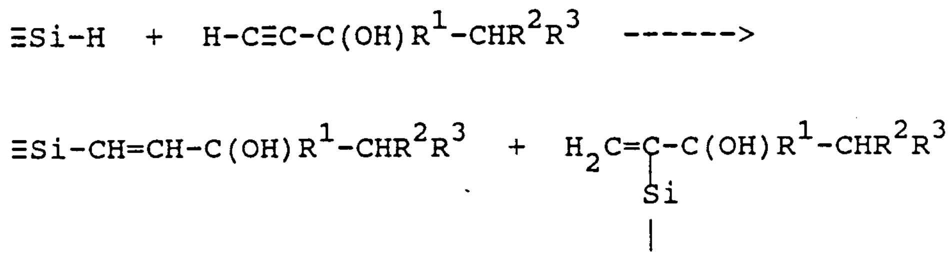

(B)

Die nach der Hydrosilylierungsreaktion erhaltenen Organo(poly)siloxane enthalten somit Si-gebundene Alkenolgruppen der Formel

$-CH=CH-C(OH)R^1-CHR^2R^3$

und/oder

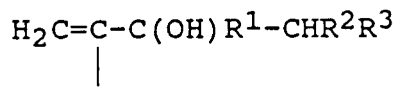

Von dem nach der Hydrosilylierungsreaktion erhaltenen Organo(poly)siloxan wird überschüssiger acetylenischer Alkohol (1) destillativ entfernt.

Entsprechend folgendem Reaktionsschema wird nach der Hydrosilylierungsreaktion in Gegenwart eines sauren Katalysators von den Alkenolgruppen intramolekular Wasser abgespalten:

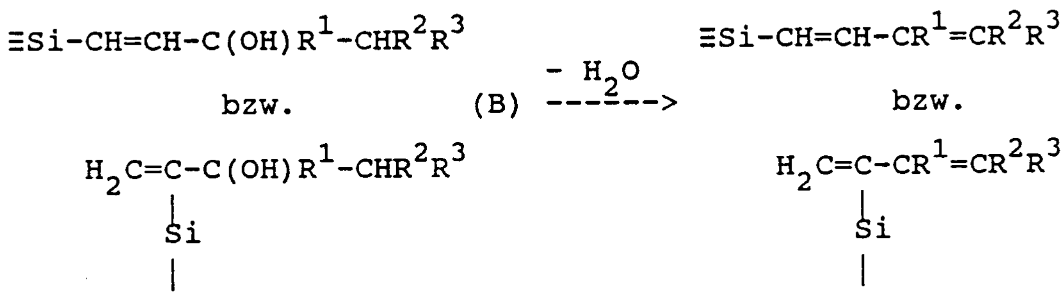


(C)

Beispiele für saure Katalysatoren (4), die bei dem erfindungsgemäßen Verfahren zugegeben werden, sind p-Toluolsulfonsäure, Trifluormethansulfonsäure, Trichloressigsäure, Fumarsäure, Schwefelsäure, Perchlorsäure, Phosphorsäure, Hexafluorphosphorsäure, stark saure Ionenaustauscher und Tonerden. Saure Katalysatoren werden vorzugsweise in Mengen von 1 bis 5000 Gew.-ppm, bevorzugt 10 bis 1000 Gew.-ppm, jeweils bezogen auf das Gesamtgewicht an eingesetztem Organo(poly)siloxan (2) und acetylenischem Alkohol (1), zugegeben.

Die Wasserabspaltung wird vorzugsweise beim Druck der umgebenden Atmosphäre, also etwa bei 1020 hpa (abs.), durchgeführt, sie kann aber auch bei höheren oder niedrigeren Drücken durchgeführt werden. Ferner wird die Wasserabspaltung vorzugsweise bei einer Temperatur von 60 °C bis 140 °C, bevorzugt 80 °C bis 120 °C, durchgeführt.

Bei der Abspaltung von Wasser aus den Alkenolgruppen werden bei dem erfindungsgemäßen Verfahren vorzugsweise inerte, mit Wasser nichtmischbare Lösungsmittel verwendet. Beispiele für inerte, mit Wasser nichtmischbare Lösungsmittel sind Xylolisomerengemische, Toluol und Cyclohexan. Inertes, mit Wasser nichtmischbares Lösungsmittel wird vorzugsweise in Mengen von 10 bis 40 Gew.-%, bezogen auf das Gewicht von Alkenolgruppen aufweisenden Organo(poly)siloxanen (B), verwendet. Das organische Lösungsmittel dient nicht nur als homogenisierendes Medium, sondern dient auch dazu, das Austragen des in dem erfindungsgemäßen Verfahren gebildeten Reaktionswassers zu erleichtern. Bevorzugt wird dabei das Reaktionswasser als Azeotrop abdestilliert, von dem kondensierten Azeotrop die Wasserphase abgetrennt und das inerte organische Lösungsmittel dem Reaktionsgemisch wieder zugeführt.

Von den Organo(poly)siloxanen mit Si-gebundenen konjugierten Dienylgruppen wird das inerte organische Lösungsmittel dann destillativ entfernt.

Um eine Vernetzung der erfindungsgemäß hergestellten Organo(poly)siloxane durch radikalische Polymerisation der konjugierten Dienylgruppen zu verhindern, werden bei dem erfindungsgemäßen Verfahren bei der Abspaltung von Wasser aus den Alkenolgruppen vorzugsweise Inhibitoren, wie Methoxyphenol, 2,6-Di-tert.-butyl-4-methylphenol, Hydrochinon, Phenothiazin, 4-Hydroxymethyl-2,6-di-tert.-butylphenol oder 4,4-Methylen-bis-2,6-di-tert.-butylphenol zugegeben.

Die nach dem erfindungsgemäßen Verfahren hergestellten Organo(poly)siloxane mit Si-gebundenen konjugierten Dienylgruppen werden gegebenenfalls mit Organo(poly)siloxan (5) äquilibriert.

Als Organo(poly)siloxane (5) werden solche ausgewählt aus der Gruppe bestehend aus linearen, endständige Triorganosiloxygruppen aufweisenden Organo(poly)siloxanen vorzugsweise der Formel

$R_3Si0(SiR_20)_rSiR_3$,

wobei R die oben dafür angegebene Bedeutung hat und r 0 oder eine ganze Zahl im Wert von 1 bis 1500 ist, linearen, endständige Hydroxylgruppen aufweisenden Organo(poly)siloxanen vorzugsweise der Formel

$H0(SiR_20)_sH$,

wobei R die oben dafür angegebene Bedeutung hat und s eine ganze Zahl im Wert von 1 bis 1500 ist, cyclischen Organo(poly)siloxanen vorzugsweise der Formel

$(R_2Si0)_t$,

wobei R die oben dafür angegebene Bedeutung hat und t eine ganze Zahl von 3 bis 12 ist, und Mischpolymerisaten aus Einheiten vorzugsweise der Formel

$R_2Si0$ und $RSi0_{3/2}$ ,

wobei R die oben dafür angegebene Bedeutung hat, eingesetzt.

Die Mengenverhältnisse der bei der gegebenenfalls durchgeführten Äquilibrierung eingesetzten Organo(poly)siloxane werden lediglich durch den gewünschten Anteil der konjugierten Dienylgruppen in den bei der gegebenenfalls durchgeführten Äquilibrierung erzeugten Organo(poly)siloxanen und durch die gewünschte mittlere Kettenlänge bestimmt.

Bei dem gegebenenfalls durchgeführten Äquilibrieren werden vorzugsweise basische und saure Katalysatoren, welche die Äquilibrierung fördern, eingesetzt. Beispiele für basische Katalysatoren sind Alkalihydroxide, wie Natriumhydroxid und Kaliumhydroxid, Trimethylbenzylammoniumnydroxid und Tetramethylammoniumhydroxid. Bevorzugt sind Alkalihydroxide. Alkalihydroxide werden vorzugsweise in Mengen von 50 bis 10 000 Gewicht.-ppm (= Teile je Million), insbesondere 500 bis 2000 Gew.-ppm, jeweils bezogen auf das Gesamtgewicht der eingesetzten Organo(poly)siloxane verwendet. Beispiele für saure Katalysatoren sind Schwefelsäure, Phosphorsäure, Trifluormethansulfonsäure, Phosphornitridchloride und unter den Reaktionsbedingungen feste, saure Katalysatoren, wie säureaktivierte Bleicherde, saure Zeolithe, sulfonierte Kohle und sulfoniertes Styrol-Divinylbenzol-Mischpolymerisat. Bevorzugt sind Phosphornitridchloride. Phosphornitridchloride werden vorzugweise in Mengen von 5 bis 1000 Gew.-ppm (= Teile je Million), insbesondere 50 bis 200 Gew.-ppm, jeweils bezogen auf das Gesamtgewicht der eingesetzten Organo(poly)siloxane, verwendet.

Die gegebenenfalls durchgeführte Äquilibrierung wird vorzugsweise bei 80 °C bis 150 °C und beim Druck der umgebenden Atmosphäre, also etwa bei 1020 hPa (abs.) durchgeführt. Falls erwünscht, können aber auch höhere oder niedrigere Drücke angewendet werden. Das Äquilibrieren wird vorzugsweise in 5 bis 20 Gew.-%, bezogen auf das Gesamtgewicht der eingesetzten Organo(poly)siloxane, in mit Wasser nichtmischbarem Lösungsmittel, wie Toluol, durchgeführt. Vor dem Aufarbeiten des bei dem Äquilibrieren erhaltenen Gemisches kann der Katalysator unwirksam gemacht werden.

Das erfindungsgemäße Verfahren kann absatzweise, halbkontinuierlich oder vollkontinuierlich durchgeführt werden.

Die erfindungsgemäß hergestellten Organo(poly)siloxane sind über die konjugierte Dienylgruppe radikalisch oder kationisch polymerisierbar bzw. vernetzbar und können mit elementarem Schwefel oder schwefelhaltigen Verbindungen nach bekannten Verfahren vulkanisiert werden. Die erfindungsgemäß hergestellten

Organo(poly)siloxane mit Si-gebundenen konjugierten Dienylgruppen können generell als Dienpartner in Diels-Alder-Reaktionen, als vernetzbare Silikonkautschukmassen, zur Homo- und Copolymerisation mit organischen Monomeren, die eine oder mehrere ungesättigte Kohlenstoff-Kohlenstoff-Bindungen enthalten, zur Herstellung von Siloxanblockcopolymeren und vernetzten siloxanhaltigen Mischpolymeren, sowie zur Herstellung von phasenseparierenden Mischpolymeren verwendet werden.

Beispiel 1:

75 mg in 1-Octen gelöstes Platintetrachlorid, das 3 mg Platin, berechnet als Element, enthält, werden in 92,5 g (1,1 Mol) 2-Methyl-3-butin-2-ol eingerührt. Zu dieser Mischung werden bei 100 °C unter Stickstoffatmosphäre 455 g eines in den endständigen Einheiten je ein Si-gebundenes Wasserstoffatom aufweisendes Dimethylpolysiloxan der durchschnittlichen Zusammensetzung $H(CH_3)_2SiO[Si(CH_3)_2O]_{10,5}Si(CH_3)_2H$ zugetropft. Nach ca. 6 Stunden Reaktionszeit bei 100 °C sind 97 % des Si-gebundenen Wasserstoffs umgesetzt. Die bei 100 °C und 5 hPa (abs.) flüchtigen Bestandteile und überschüssiges 2-Methyl-3-butin-2-ol werden dann destillativ entfernt. Es werden 500 g eines Dimethylpolysiloxans mit endständigen, Si-gebundenen Alkenolgruppen der Formel

$-CH=CH-C(OH)(CH_3)-CH_3$

und

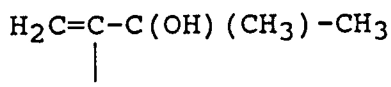

erhalten. Das $^1$H-NMR-Spektrum zeigt für die obigen Alkenolgruppen ein Isomerenverhältnis von 65 : 35. Das endständige, Si-gebundene Alkenolgruppen aufweisende Dimethylpolysiloxan ist ein gelbliches Öl mit einer Viskosität von 47 $mm^2 \cdot s^{-1}$ bei 25 °C. Unter Zugabe von 2 g p-Toluolsulfonsäure, 40 mg Methoxyphenol und 500 ml Cyclohexan wird bei 80 °C bis 90 °C das Wasser von den Alkenolgruppen abgespalten und azeotrop entfernt. Anschließend wird die Lösung unter Zusatz von Tonerde und etwas Soda filtriert und das Cyclohexan destillativ im Vakuum entfernt. Es werden ca. 470 g eines gelblichen Öls mit einer Viskosität von 15 $mm^2 \cdot s^{-1}$ bei 25 °C erhalten. Das $^1$H-NMR-Spektrum zeigt für das Dimethylpolysiloxan, das endständige, Si-gebundene konjugierte Dienylgruppen der Formel

$-CH=CH-C(CH_3)=CH_2$

und

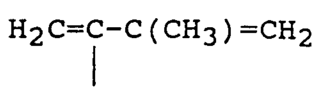

enthält, ein analoges Isomerengemisch für die konjugierten Dienylgruppen wie für die Alkenolgruppen und eine Umsetzung von 95 % der Alkenolgruppen. Das IR-Spektrum weist bei 1579 $cm^{-1}$ und 1615 $cm^{-1}$ die Valenzschwingungen für die endständigen Doppelbindungen in den konjugierten Diengruppen auf.

Beispiel 2:

Die Arbeitsweise von Beispiel 1 wird wiederholt mit der Abänderung, daß 108 g 3-Methyl-4-pentin-3-ol anstelle 92,5 g 2-Methyl-3-butin-2-ol verwendet werden. Es werden ca. 510 g eines Dimethylpolysiloxans mit endständigen, Si-gebundenen isomeren Alkenolgruppen der Formel

$-CH=CH-C(OH)(CH_3)-C_2H_5$

und

$$H_2C=C-C(OH)(CH_3)-C_2H_5$$

erhalten. Die Umsetzung der Alkenolgruppen zu den konjugierten Diengruppen erfolgt analog Beispiel 1. Der Umsatz beträgt 90 %. Es wird ein Dimethylpolysiloxan mit endständigen, Si-gebundenen konjugierten Dienylgruppen folgender Formel erhalten, wobei sich der Anteil der verschiedenen Isomeren aus dem $^1$H-NMR-Spektrum ergibt:

| | |
|---|---|
| $-CH=CH-C(CH_3)=CH-CH_3$ | 35 Mol % |
| $H_2C=C-C(CH_3)=CH-CH_3$ | 19 Mol % |
| $-CH=CH-C(C_2H_5)=CH_2$ | 30 Mol % |
| $H_2C=C-C(C_2H_5)=CH_2$ | 16 Mol % |

Das IR-Spektrum weist zwischen 1570 $cm^{-1}$ und 1630 $cm^{-1}$ mehrere Banden für die endständigen Doppelbindungen in den konjugierten Dienylgruppen auf.

Beispiel 3:

75 mg in 1-Octen gelöstes Platintetrachlorid, das 3 mg Platin, berechnet als Element, enthält, werden in 92,5 g (1,1 Mol) 2-Methyl-3-butin-2-ol eingerührt. Zu dieser Mischung werden bei 100 °C unter Stickstoffatmosphäre innerhalb von 2 Stunden 182 g eines Mischpolymerisats aus Methylhydrogensiloxaneinheiten, Dimethylsiloxaneinheiten und Trimethylsiloxaneinheiten mit einer Viskosität von 11,2 $mm^2 \cdot s^{-1}$ bei 25 °C, das 0,55 Gew.-% Si-gebundenen Wasserstoff enthält, zugetropft. Nach ca. 2 Stunden Reaktionszeit bei 100 °C sind 97 % des Si-gebundenen Wasserstoffs umgesetzt. Die bei 100 °C und 5 hPa (abs.) flüchtigen Bestandteile werden dann destillativ entfernt. Es wird ein klares Öl mit einer Viskosität von 1945 $mm^2 \cdot s^{-1}$ bei 25 °C erhalten. Das $^1$H-NMR-Spektrum zeigt für das Mischpolymerisat, das seitenständige, Si-gebundene Alkenolgruppen der Formel

$-CH=CH-C(OH)(CH_3)-CH_3$

und

$$H_2C=C-C(OH)(CH_3)-CH_3$$

enthält, ein Isomerenverhältnis von 69 : 31 für die obigen Alkenolgruppen. Unter Zugabe von 2 g p-Toluolsulfonsäure, 20 mg Methoxyphenol und 250 ml Cyclohexan wird unter Rückflußbedingungen das Wasser von den Alkenolgruppen abgespalten und azeotrop ausgekreist. Nach 20 Stunden wird zu der Reaktionsmischung 1 g wasserfreie Soda zugegeben und die Lösung filtriert. Das Cyclohexan wird dann destillativ entfernt. Es werden ca. 180 g eines Dimethylpolysiloxans, das durchschnittlich 8 Si-gebundene isomere konjugierte Dienylgruppen der Formel

$-CH=CH-C(CH_3)=CH_2$

und

$$H_2C=C-C(CH_3)=CH_2$$
|

pro Molekül enthält, mit einer Viskosität von 72 $mm^2 \cdot s^{-1}$ bei 25 °C erhalten. Das $^1H$-NMR-Spektrum zeigt einen Umsatz von 97 %, bezogen auf die Alkenolgruppen. Das IR-Spektrum weist bei 1580 $cm^{-1}$ und 1618 $cm^{-1}$ die Valenzschwingungen für die endständigen Doppelbindungen in den konjugierten Dienylgruppen auf.

Beispiel 4:

75 mg in 1-Octen gelöstes Platintetrachlorid, das 3 mg Platin, berechnet als Element, enthält, werden in 92,5 g (1,1 Mol) 2-Methyl-3-butin-2-ol eingerührt. Zu dieser Mischung werden bei 100 °C unter Stickstoffatmosphäre 752 g eines Mischpolymerisats aus Dimethylhydrogensiloxan-, Methylhydrogensiloxan- und Dimethylsiloxaneinheiten mit einer Viskosität von 91 $mm^2 \cdot s^{-1}$ bei 25 °C, das 0,133 Gew.-% (1,00 val) Si-gebundenen Wasserstoff enthält, zugetropft. Nach ca. 5 Stunden Reaktionszeit bei 120 °C sind 98 % des Si-gebundenen Wasserstoffs des Mischpolymerisats umgesetzt. Die bei 100 °C und 15hPa (abs.) flüchtigen Bestandteile werden dann destillativ entfernt. Es werden 817 g eines Dimethylpolysiloxans mit endständigen und seitenständigen, Si-gebundenen Alkenolgruppen der Formel

$-CH=CH-C(OH)(CH_3)-CH_3$

und

$$H_2C=C-C(OH)(CH_3)-CH_3$$
|

erhalten. Unter Zugabe von 4g p-Toluolsulfonsäure , 60 mg Methoxyphenol und 700 ml Cyclohexan werden unter Rückflußbedingungen Wasser von den Alkenolgruppen abgespalten und insgesamt ca. 18 ml Wasser azeotrop ausgekreist. Anschließend wird die Lösung unter Zusatz von 1% Tonerde und 2 g Soda filtriert und das Cyclohexan destillativ entfernt. Es werden ca. 790 g eines klaren gelblichen Öls mit einer Viskosität von 195 $mm^2.s^{-1}$ bei 25 °C erhalten. Das $^1H$-NMR-Spektrum zeigt für das Dimethylpolysiloxan, das endständige und seitenständige, Si-gebundene konjugierte Dienylgruppen der Formel

$-CH=CH-C(CH_3)=CH_2$

und

$$H_2C=C-C(CH_3)=CH_2$$
|

enthält, für die obigen konjugierten Dienylgruppen ein Isomerenverhältnis von 65:35.

Beispiel 5:

6,6 mg Platin, berechnet als Element, in Form einer 1%igen Lösung von $H_2PtCl_6 . 3H_20$ in Isopropanol werden in 370 g 2-Methyl-3-butin-2-ol eingerührt. Zu dieser Mischung werden bei 100 °C unter Stickstoffatmosphäre eine Mischung aus 268 g 1,1,3,3-Tetramethyldisiloxan und 6,6 mg Platin, berechnet als Element, in Form einer 1%igen Lösung von $H_2PtCl_6.3H_20$ in Isopropanol zugetropft, wobei die Temperatur 115 °C nicht übersteigen soll. Nach ca. 5 Stunden Reaktionszeit sind 99% des Si-gebundenen Wasserstoffs des 1,1,3,3-Tetramethyldisiloxan umgesetzt. Die bei 80 °C und 15 hPa (abs.) flüchtigen Bestandteile werden

dann destillativ entfernt. Es werden 572 g (95% d.Th). eines Disiloxans mit einer Viskosität von 150 $mm^2.s^{-1}$ bei 25 ° C und mit endständigen Si-gebundenen Alkenolgruppen der Formel

-CH = CH-C(OH)($CH_3$)-$CH_3$

und

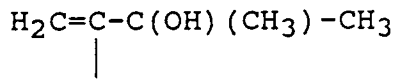

erhalten. Das $^1$H-NMR-Spektrum zeigt für die obigen Alkenolgruppen ein Isomerenverhältnis von 71:29. Unter Zugabe von 600 ml Cyclohexan, 4 g Toluolsulfonsäure und 50 Gew.-ppm Methoxyphenol wird unter Rückflußbedingungen Wasser von den Alkenolgruppen abgespalten und insgesamt ca. 66 ml Wasser azeotrop ausgekreist. Anschließend wird die Lösung unter Zusatz von 12 g Tonerde und 2 g Soda gereinigt, filtriert und das Cyclohexan destillativ entfernt. Es werden 480 g eines Disiloxans mit endständigen Si-gebundenen konjugierten Dienylgruppen der Formel

-CH = CH-C($CH_3$) = $CH_2$

und

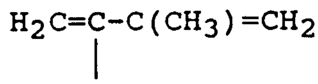

erhalten. Das $^1$H-NMR-Spektrum zeigt für das Disiloxan ein analoges Isomerengemisch für die konjugierten Dienylgruppen, wie für die Alkenolgruppen. Durch Vakuumdestillation läßt sich ein farbloses Produkt mit einer Viskosität von 2,3 $mm^2.s^{-1}$ bei 25 ° C erhalten.

Beispiel 6:

26 g des Produktes aus Beispiel 1 werden mit 208 g Decamethylcyclopentasiloxan, 50 Gew.-ppm Methoxyphenol und 1000 Gew.-ppm KOH (in 40 %iger methanolischer Lösung) 16 Stunden bei 140 ° C equilibriert. Dann werden 0,5 g Eisessig zugegeben, die Lösung wird nach dem Abkühlen und nach Zusatz von Tonerde filtriert und die bei 100 ° C und 10 hPa (abs.) flüchtigen Bestandteile werden destillativ entfernt. Es wird ein farbloses Öl mit einer Viskosität von 420 $mm^2.s^{-1}$ bei 25 ° C gewonnen. Das so erhaltene Öl ist ein Dimethylpolysiloxan mit entständigen Si-gebundenen konjugierten Dienylgruppen der Formel

-CH = CH-C($CH_3$) = $CH_2$

und

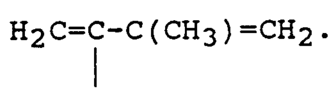

## Patentansprüche

**1.** Verfahren zur Herstellung von Organo(poly)siloxanen mit Si-gebundenen konjugierten Dienylgruppen der allgemeinen Formel

$$Q_aR_bSiO_{\frac{4-(a+b)}{2}} \quad (I) \; ,$$

wobei R gleich oder verschieden ist, einen einwertigen gegebenenfalls halogenierten Kohlenwasserstoffrest mit 1 bis 18 Kohlenstoffatom(en) je Rest bedeutet,
Q einen Rest der Formel

$-CH=CH-CR^1=CR^2R^3$

und/oder

$$H_2C=\underset{|}{C}-CR^1=CR^2R^3$$

bedeutet, wobei $R^1$ ein Wasserstoffatom oder einen einwertigen, gegebenenfalls halogenierten Kohlenwasserstoffrest mit 1 bis 12 Kohlenstoffatom(en) je Rest und
$R^2$ ein Wasserstoffatom oder einen einwertigen Kohlenwasserstoffrest mit 1 bis 12 Kohlenstoffatom(en) je Rest bedeutet oder die beiden Reste $R^1$ und $R^2$ zusammen einen zweiwertigen Kohlenwasserstoffrest mit 3 bis 5 Kohlenstoffatomen je Rest darstellen,
$R^3$ ein Wasserstoffatom oder einen einwertigen Kohlenwasserstoffrest mit 1 bis 4 Kohlenstoffatom(en) je Rest bedeutet, mit der Maßgabe, daß $R^3$ ein Wasserstoffatom ist, wenn die beiden Reste $R^1$ und $R^2$ zusammen einen zweiwertigen Kohlenwasserstoffrest mit 3 bis 5 Kohlenstoffatomen je Rest darstellen,
a 0 oder 1, durchschnittlich 0,003 bis 1,0,
b 0, 1, 2 oder 3 , durchschnittlich 0,05 bis 2,5,
und die Summe a + b durchschnittlich nicht größer als 3 ist,
mit der Maßgabe, daß mindestens ein Rest Q je Molekül enthalten ist, dadurch gekennzeichnet, daß sekundärer oder tertiärer acetylenischer Alkohol (1) der allgemeinen Formel

$HC{\equiv}C-C(OH)R^1-CHR^2R^3$ ,

wobei $R^1$, $R^2$ und $R^3$ die oben dafür angegebene Bedeutung haben, an ein Organo(poly)siloxan (2) mit mindestens einem Si-gebundenen Wasserstoffatom der allgemeinen Formel

$$H_eR_fSiO_{\frac{4-(e+f)}{2}} \; ,$$

wobei R die oben dafür angegebene Bedeutung hat,
e 0 oder 1, durchschnittlich 0,003 bis 1,0,
f 0, 1, 2 oder 3, durchschnittlich 0,05 bis 2,5 und
die Summe von e + f nicht größer als 3 ist,
in Gegenwart von die Anlagerung von Si-gebundenen Wasserstoff an aliphatische Mehrfachbindung förderndem Katalysator (3) angelagert wird, und dann von den Alkenolgruppen des so erhaltenen Organo(poly)siloxans in Gegenwart von saurem Katalysator (4) Wasser intramolekular abgespalten wird.

**2.** Verfahren nach Anspruch 1, dadurch gekennzeichnet, daß als sekundärer oder tertiärer acetylenischer Alkohol (1) 2-Methyl-3-butin-2-ol verwendet wird.

**3.** Verfahren nach Anspruch 1 oder 2, dadurch gekennzeichnet, daß das so erhaltene Organo(poly)siloxan mit Si-gebundenen konjugierten Dienylgruppen mit Organo(poly)siloxan (5) ausgewählt aus der Gruppe bestehend aus linearen, endständige Triorganosiloxangruppen aufweisenden Organo(poly)siloxanen, linearen, endständige Hydroxylgruppen aufweisenden Organo(poly)siloxanen, cyclischen Organo(poly)-siloxanen und Mischpolymerisaten aus Diorgano-siloxan- und Monoorganosiloxaneinheiten äquilibriert

wird.

**Claims**

1. Process for the preparation of organo(poly)siloxanes having Si-linked, conjugated dienyl groups of the formula

$$Q_aR_bSiO_{\frac{4-(a+b)}{2}} \quad (I) \;,$$

in which the Rs are identical or different and denote a monovalent, optionally halogenated hydrocarbon radical having 1 to 18 carbon atom(s) per radical,
Q denotes a radical of the formula

$-CH=CH-CR^1=CR^2R^3$

and/or

$$H_2C=\underset{|}{C}-CR^1=CR^2R^3$$

in which $R^1$ denotes a hydrogen atom or a monovalent,
optionally halogenated hydrocarbon radical having 1 to 12 carbon atom(s) per radical and $R^2$ denotes a hydrogen atom or a monovalent hydrocarbon radical having 1 to 12 carbon atom(s) per radical, or the two radicals $R^1$ and $R^2$ together represent a divalent hydrocarbon radical having 3 to 5 carbon atoms per radical,
$R^3$ denotes a hydrogen atom or a monovalent hydrocarbon radical having 1 to 4 carbon atom(s) per radical, subject to the proviso that $R^3$ is a hydrogen atom if the two radicals $R^1$ and $R^2$ together represent a divalent hydrocarbon radical having 3 to 5 carbon atoms per radical,
a is 0 or 1, on average 0.003 to 1.0,
b is 0, 1, 2 or 3, on average 0.05 to 2.5, and the sum of a + b is on average not greater than 3,
subject to the proviso that at least one radical Q is present per molecule, characterized in that a secondary or tertiary acetylenic alcohol (1) of the formula

$HC{\equiv}C-C(OH)R^1-CHR^2R^3$ ,

in which $R^1$, $R^2$ and $R^3$ have the meaning indicated above, is added on to an organo(poly)siloxane (2) which has at least one Si-linked hydrogen atom and has the formula

$$H_eR_fSiO_{\frac{4-(e+f)}{2}} \;,$$

in which R has the meaning indicated above,
e is 0 or 1, on average 0.003 to 1.0,
f is 0, 1, 2 or 3, on average 0.05 to 2.5, and the sum of e + f is not greater than 3,
in the presence of a catalyst (3) which promotes the addition of Si-linked hydrogen onto an aliphatic multiple bond, and water is then eliminated by an intramolecular reaction in the presence of an acid catalyst (4) from the alkenol groups of the organo(poly)siloxane thus obtained.

2. Process according to Claim 1, characterized in that the secondary or tertiary acetylenic alcohol (1) used is 2-methyl-3-butyn-2-ol.

3. Process according to Claim 1 or 2, characterized in that the resulting organo(poly)siloxane having Si-linked, conjugated dienyl groups is equilibrated with an organo(poly)siloxane (5) selected from the group composed of linear organo(poly)siloxanes having terminal triorganosiloxane groups, linear organo(poly)siloxanes having terminal hydroxyl groups, cyclic organo (poly)siloxanes and copolymers formed from diorganosiloxane and monoorganosiloxane units.

**Revendications**

1. Procédé de préparation d'organo(poly)siloxanes à groupes diényliques conjugués liés à du silicium, de formule générale :

$$Q_aR_bSiO_{\frac{4-(a+b)}{2}} \quad (I) \quad ,$$

dans laquelle R ou les R, qui peuvent être identiques ou différents les uns des autres, représentent un radical hydrocarboné monovalent éventuellement halogéné ayant de 1 à 18 atomes de carbone,
Q représente un radical de formule :

$-CH=CH-CR^1=CR^2R^3$

et/ou

$$H_2C=\underset{|}{C}-CR^1=CR^2R^3,$$

$R^1$ désignant un atome d'hydrogène ou un radical hydrocarboné monovalent éventuellement halogéné ayant de 1 à 12 atomes de carbone et $R^2$ un atome d'hydrogène ou un radical hydrocarboné monovalent ayant de 1 à 12 atomes de carbone, ou bien $R^1$ et $R^2$ forment ensemble un radical hydrocarboné divalent ayant de 3 à 5 atomes de carbone, et et $R^3$ désignant un atome d'hydrogène ou un radical hydrocarboné monovalent ayant de 1 à 4 atomes de carbone, avec la condition que $R^3$ soit un atome d'hydrogène si $R^1$ et $R^2$ forment ensemble un radical hydrocarboné divalent ayant de 3 à 5 atomes de carbone,
a est 0 ou 1, en moyenne de 0,003 à 1,0,
b est 0, 1, 2 ou 3, en moyenne de 0,05 à 2,5, et la somme a + b n'est en moyenne pas supérieure à 3, avec la condition qu'il y ait au moins un radical Q par molécule,
procédé caractérisé en ce que l'on fixe par addition un alcool acétylénique secondaire ou tertiaire (1) de formule générale :

$HC\equiv C-C(OH)R^1-CHR^2R^3$,

$R^1$, $R^2$ et $R^3$ ayant les significations précédentes, sur un organo(poly)siloxane (2) ayant au moins un atome d'hydrogène lié au silicium, de formule générale :

$$H_eR_fSiO_{\frac{4-(e+f)}{2}} \quad ,$$

R ayant la signification précédemment donnée,
e étant 0 ou 1, en moyenne de 0,003 et 1,0,
f étant 0, 1, 2 ou 3, en moyenne de 0,05 et 2,5, et la somme e + f n'étant pas supérieure à 3,
en présence d'un catalyseur (3) favorisant la fixation d'hydrogène lié à du silicium sur une liaison multiple aliphatique, puis on élimine par voie intramoléculaire l'eau des groupes alcénoliques de l'organo(poly)siloxane ainsi obtenu en présence d'un catalyseur acide (4).

2. Procédé selon la revendication 1, caractérisé en ce que l'on utilise comme alcool acétylénique secondaire ou tertiaire (1) le 2-méthyl-3-butyn-2-ol.

3. Procédé selon la revendication 1 ou 2, caractérisé en ce que l'on met l'organo(poly)siloxane ainsi obtenu, à groupes diényliques conjugués liés à des atomes de silicium, en équilibre avec un organo-(poly)siloxane (5) pris parmi des organo(poly)siloxanes linéaires à groupes de triorganosiloxanes terminaux, des organo(poly)siloxanes linéaires à groupes hydroxyliques terminaux, des organo(poly)-siloxanes cycliques et des copolymères formés de motifs de diorganosiloxanes et de monoorganosiloxanes.